# EUROPÄISCHE PATENTANMELDUNG

(11) **EP 4 556 101 A1**
(43) Veröffentlichungstag der Anmeldung: **21.05.2025**
(21) Anmeldenummer: 23210903.3
(22) Anmeldetag: 20.11.2023
(51) Int. Cl.: B01D 53/14

(54) **VERFAHREN ZUR ENTFERNUNG VON GASEN**

(71) Anmelder: Evonik Operations GmbH, 45128 Essen (DE)
(72) Erfinder: SPYROU, Emmanouil, 46514 Schermbeck (DE); GOLLAN, Elke, 44653 Herne (DE); THESING, Andrea, 48683 Ahaus (DE); SCHRODER, Judith, 45721 Haltern am See (DE); KLAWKOWSKI, Ralf, 45659 Recklinghausen (DE); APPEL, Christine, 45659 Recklinghausen (DE); BOEK, Florian, 58455 Witten (DE); KOHLSTRUK, Stephan, 45966 Gladbeck (DE)
(74) Vertreter: Evonik Patent Association

(57) **Zusammenfassung**

Gegenstand der vorliegenden Erfindung ist ein Verfahren zur Entfernung mindestens eines Gases aus einem Fluidstrom, bei dem ein Absorptionsmittel mit dem Fluidstrom in Kontakt gebracht wird, bei dem das Absorptionsmittel mindestens eine aminogruppenhaltige Verbindung umfasst, die ein aminoalkyliertes Isophorondiamin ist.

## Beschreibung

Die vorliegende Erfindung betrifft ein Verfahren zur Entfernung mindestens eines Gases aus einem Fluidstrom.

Die Entfernung von Gasen aus Fluidströmen hat in den letzten Jahrzehnten sehr an Bedeutung gewonnen. Insbesondere die Entfernung von Kohlendioxid (CO₂) aus Rauch- bzw. Abgasen ist aus verschiedenen Gründen wünschenswert. Die größte Bedeutung hat in diesem Kontext die Verminderung der Emission von Kohlendioxid, da diese als Hauptursache für den Treibhauseffekt angesehen wird.

Zum Stand der Technik gehört die Entfernung von CO₂ aus Fluidströmen mit Aminen. Dabei können z.B. CO₂-haltige (Ab-)Gasströme mit Lösungen von Aminen in Kontakt gebracht werden. Bei der Reaktion von eingesetztem Amin + CO₂ bilden sich dabei unterschiedliche Produkte: mit primären oder sekundären Aminen Carbamate und mit tertiären Aminen Carbonate. Diese Produkte fallen aus oder gehen in Lösung, so dass das CO₂ aus den Gasen entfernt wird. Um das gebundene CO₂ wieder freizusetzen, werden die ausgefällten bzw. gelöste Carbamate bzw. Carbonate an geeigneter Stelle aufgeheizt. Das entstehende CO₂ wird entweder gelagert oder direkt chemisch umgesetzt.

WO 2010/149599 A1 offenbart ein Verfahren zur Entfernung von Gasen aus einem Fluidstrom, bei dem eine Absorptionsflüssigkeit eingesetzt wird, die ein Amin, ein Stripphilfsmittel und Wasser umfasst. Bevorzugt handelt es sich bei den zu entfernenden Gasen um CO₂, H₂S, COS, Mercaptane, SOs, SO₂, CS₂ und HCN. Ganz besonders bevorzugt handelt es sich bei dem Amin um Monoethanolamin, Piperazin, Methylaminopropylamin, Diethanolamin oder 1-Hydroxyethylpiperazin.

WO 2016/068698 A1 und WO 2016/068699 A1 offenbaren Verfahren zur COz-Absorption, bei denen primäre, sekundäre oder tertiäre Amine in wässriger Lösung eingesetzt werden können. Bevorzugt einsetzbare Amine sind Monoamine. Weiterhin können die Amine mit einer funktionellen Gruppe, bevorzugt eines Hydroxygruppe substituiert sein. Die Amine können weiterhin cyclische Amine sein. Ganz besonders bevorzugt ist das Amin N,N-Dimethylcyclohexylamin (DMCA), N-Methylcyclohexylamin (MCA) oder ein Gemisch davon.

WO 2014/140108 A1 offenbart ein Verfahren zur Absorption von CO₂ aus einem CO₂-haltigen Gasstrom, bei dem ein COz-Absorptionsmittel eingesetzt wird, das ein thermoresponsives Copolymer umfassend Aminmonomere umfasst. Die Aminmonomere können jedes polymerisierbare Monomer sein, das mindestens eine primäre, sekundäre oder tertiäre funktionelle Aminogruppe aufweist. Bevorzugte Aminmonomere können ausgewählt werden aus der Gruppe bestehend aus Amin-funktionalisierten Acrylamiden, Amin-funktionalisierten Methacrylamiden, Amin-funktionalisierten Acrylaten, Amin-funktionalisierten Methacrylaten und cyclischen Aminmonomeren. Nachteilig an dem geschilderten Verfahren ist jedoch, dass das Copolymer aufwändig synthetisiert werden muss. Das offenbarte COz-Absorptionsmittel kann weiterhin eine in Wasser gelöste Aminkomponente aufweisen. Die diesbezüglich genannten Verbindungen umfassen u.a. 3,3,5-Trimethylcyclohexylamin, N-Methylcyclohexylamin, N,N-Dimethylcyclohexylamin, N-Methyldiethanolamin, Piperazin und 2-Aminoethanol.

WO 2015/053619 A1 offenbart ein Verfahren zur Absorption von CO₂ aus einem CO₂-haltigen Gasstrom, bei dem ein COz-Absorptionsmittel umfassend eine Amin-haltige Komponente, ein anorganisches Salz und Wasser eingesetzt wird. Die Amin-haltige Komponente weist einen Siedepunkt von mindestens 100 °C auf. Die Amin-haltige Komponente kann eine organische Verbindung mit 2 - 20 Kohlenstoffatomen sein. Die genannten Verbindungen schließen u.a. 3,3,5-Trimethylcyclohexylamin, N-Methylcyclohexylamin, N,N-Dimethylcyclohexylamin, N-Methyldiethanolamin, Piperazin und 2-Aminoethanol ein.

US 4,112,050 A offenbart u.a. die Eignung verschiedener cycloaliphatischer Amine, wie z.B. N¹-Cyclohexyl-1,2-propandiamin, 1-Amino-1-(2-amino-isopropyl)-cyclohexan, 1-Methylamino-1-aminomethyl-cyclopentan, 1-Amino-1-aminomethylcycloheptan, N-Isopropyl-1,2-Diaminocyclohexan, N²-Cyclohexyl-1,2-butandiamin, N²-Cyclohexyl-1,2-propandiamin, N-Cycloheptyl-1,2-ethylendiamin, N¹-Cyclohexyl-2-methyl-1,2-propandiamin, 1-(2-Aminoisopropyl)-2-amino-3-methyl-cyclopentan, N-Isopropyl-1,4-Diaminocyclohexan, N¹-Cyclohexyl-N²-methylethylendiamin, N-Cyclohexylethylendiamin, N¹-Cyclohexyl-N²-ethylethylendiamin, N¹-Cyclohexyl-N²-Methyl-1,2-Propandiamin, N-Cyclohexyl-1,3-propandiamin, 1,8-p-Menthandiamin, 1-Amino-1-aminomethylcyclohexan, 1,3-Diamino-1-methylcyclohexan und N²-Cyclohexyl-2-methyl-1,2-propandiamin, für die Absorption von CO₂. Das beschriebene Verfahren setzt wässrige Lösungen der genannten Amine ein.

WO 2013/075697 A1 offenbart ein Verfahren zum Abtrennen von CO₂ aus einem Fluidgemisch und/oder -strom, bei dem ein cyclisches Amin eingesetzt wird. Die offenbarten cyclischen Amine schließen 1,2-Diaminocyclohexan, 1,3-Diaminocyclohexan, 1,4-Diaminocyclohexan, 1,2,3-Triaminocyclohexan, 1,2,4-Triaminocyclohexan, 1,3,5-Triaminocyclohexan, 1,8-Diazabicyclo[5.4.0]-undec-7-en, 1,5-Diazabicyclo[4.3.0]non-5-en, N-Methylcyclohexandiamin, N¹,N²-1,2-Dimethyl-cyclohexandiamin, N¹,N¹,N²-Trimethylcyclohexan-1,2-diamin, N-Methyl-1,3-cyclohexandiamin, N',N'-Dimethyl-1,3-cyclohexandiamin, N¹,N³-Dimethyl-1,3-cyclohexandiamin, N-Methyl-1,4-cyclohexandiamin, N',N'-Dimethyl-1,4-cyclohexandiamin, N¹,N⁴-Dimethyl-1,4-cyclohexandiamin, N¹,N⁴,N⁴-Trimethyl-1,4-cyclohexandiamin, Indol und Isophorondiamin ein. Ganz besonders bevorzugt ist Isophorondiamin. Bevorzugte Amine, insbesondere Isophorondiamin, bilden mit CO₂ Carbamate, die in dem verwendeten Solvens mindestens partiell unlöslich sind, und als feste oder flüssige Phase abgetrennt werden können. Dies ermöglicht eine einfachere und weniger energieintensive Wiederfreisetzung des gebundenen CO₂.

Auch WO 2022/085789 A1 offenbart ein Verfahren zur Speicherung von CO₂, bei dem Amine eingesetzt werden, deren Kohlenwasserstoffgerüst eine cyclische Form aufweist. Beispielhaft genannte und in den Versuchen eingesetzte Verbindungen schließen Isophorondiamin, Cyclohexylamin, 1,2-Cyclohexandiamin, 1,4-Cyclohexandiamin und 4,4`-Methylenbis(2-Methylcyclohexylamin) ein.

ACS Environ. Au 2022, 2, 354-362 offenbart eine Studie, in der die Absorptionskapazitäten verschiedener Amine gegenübergestellt werden. Primäre Amine zeigen eine höhere Speichereffizienz als sekundäre und tertiäre Amine, möglicherweise aufgrund von sterischer Hinderung. Primäre aromatische Amine wie Anilin absorbieren jedoch quasi kein CO₂. Diamine mit einer Aminocyclohexylgruppe zeigen eine höhere Speicherkapazität als Monoamine und weisen weiterhin anders als letztere den Vorteil auf, zu unlöslichen Niederschlägen zu führen. Für Isophorondiamin wird weiterhin überraschenderweise eine besonders hohe CO₂-Speicherkapazität in Verbindung mit einer besonders vorteilhaften langen Effizienzdauer (T₉₀) offenbart. Isophorondiamin wird in Kombination mit der ebenfalls festgestellten niedrigeren Desorptionstemperatur im Vergleich zu Monoethanolamin als besonders bevorzugt herausgestellt.

Wünschenswert wäre es jedoch, Verfahren bereitzustellen, bei denen bei gleicher Eignung der eingesetzten Amine zur Speicherung von CO₂ der Energiebedarf zur Abtrennung des CO₂ aus den Carbamaten der eingesetzten Amine weiter gesenkt werden kann.

Überraschenderweise wurde nun festgestellt, dass aminoalkyliertes Isophorondiamin die Aufgabe löst, besonders gut CO₂ zu absorbieren und es bei besonders niedrigen Temperaturen wieder zu desorbieren.

Gegenstand der vorliegenden Erfindung ist somit ein Verfahren zur Entfernung mindestens eines Gases aus einem Fluidstrom, bei dem ein Absorptionsmittel mit dem Fluidstrom in Kontakt gebracht wird, wobei das Absorptionsmittel mindestens eine aminogruppenhaltige Verbindung umfasst, die ein aminoalkyliertes Isophorondiamin ist.

Bei dem Fluidstrom, aus dem mindestens ein Gas entfernt werden soll, kann es sich um den Strom eines Fluids ausgewählt aus Gasen und Flüssigkeiten handeln. Handelt es sich bei dem Fluid um ein Gas, ist das Fluid bevorzugt ausgewählt aus der Gruppe von Gasen bestehend aus Erdgas, Synthesegas, Koksofengas, Spaltgas, Kohlevergasungsgas, Kreisgas, Deponiegas und Verbrennungsgas. Handelt es sich bei dem Fluid um eine Flüssigkeit, ist die Flüssigkeit bevorzugt ausgewählt aus Liquified Petroleum Gas (LPG, Autogas) und Liquid Natural Gas (LNG, Flüssigerdgas) oder eines der o.g. bevorzugten Gase in verflüssigter Form.

Besonders geeignet ist das erfindungsgemäße Verfahren zur Entfernung von Gasen aus ebenfalls gasförmigen Fluidströmen.

Bei dem zu entfernenden Gas handelt es sich um bei den Verfahrensbedingungen und weiter bevorzugt auch bei SATP-Bedingungen (298,15 K, 1,013 bar) vorliegende gasförmige Verbindungen. Bevorzugt handelt es sich bei dem Gas um ein Gas ausgewählt aus CO₂, H₂S, COS, der Gruppe der gasförmigen Thiole, SOs, SO₂, CS₂ und HCN. Vorteilhafterweise ist das erfindungsgemäße Verfahren besonders geeignet zur Entfernung von CO₂.

Bei dem erfindungsgemäßen Verfahren wird der Fluidstrom mit einem Absorptionsmittel umfassend mindestens eine aminogruppenhaltige Verbindung in Kontakt gebracht. Das heißt, der Fluidstrom kann mit einem Absorptionsmittel, das ein, zwei, drei oder mehr als drei aminogruppenhaltige Verbindungen umfasst, in Kontakt gebracht werden. Besonders bevorzugt wird der Fluidstrom mit einem Absorptionsmittel enthaltend nur eine aminogruppenhaltige Verbindung in Kontakt gebracht. Zu Erzielung vorteilhafter Eigenschaften kann es alternativ vorteilhaft sein, den Fluidstrom mit einem Absorptionsmittel enthaltend zwei aminogruppenhaltige Verbindungen in Kontakt zu bringen.

Unter einem Absorptionsmittel ist dabei eine flüssige oder gasförmige Zusammensetzung zu verstehen, die in der Lage ist, das in dem Fluidstrom enthaltene Gas zu absorbieren. Weiter bevorzugt liegt das Absorptionsmittel bei den Verfahrensbedingungen und weiter bevorzugt auch bei SATP-Bedingungen, flüssig vor.

Mindestens eine der aminogruppenhaltigen Verbindungen in dem Absorptionsmittel ist ein alkyliertes Isophorondiamin. Enthält das Absorptionsmittel nur eine aminogruppenhaltige Verbindung, ist die aminogruppenhaltige Verbindung somit ein aminoalkyliertes Isophorondiamin. Umfasst das Absorptionsmittel mehr als eine aminogruppenhaltige Verbindung, kann es sich bei allen aminogruppenhaltigen Verbindungen um aminoalkylierte Isophorondiamine handeln, die unterschiedlich alkyliert sind. Alternativ kann das Absorptionsmittel auch mehrere unterschiedlich aminoalkylierte Isophorondiamine und andere aminogruppenhaltige Verbindungen umfassen.

Bevorzugt sind aminoalkylierte Isophorondiamine, die ausschließlich an der ringständigen Aminogruppe in Position 1 alkyliert sind. Diese können CO₂ ganz besonders gut absorbieren und wieder freisetzen. Entsprechende aminoalkylierte Isophorondiamine weisen die nachfolgend dargestellte Formel (I) auf, 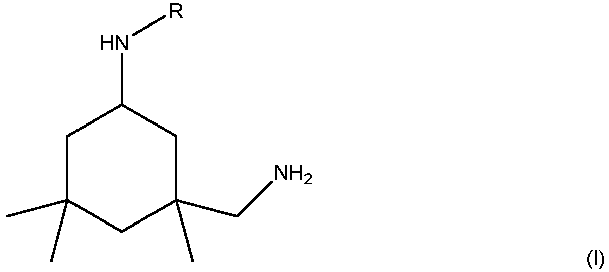 in der R
- einen Alkylrest der Formel -CₙH₂ₙR' mit n = 1-10 und R' = H, OH oder C₁-C₃-Alkyl oder
- einen aromatischen Rest R = -C₆H₄R" mit R" = H, OH, oder C₁-C₃-Alkyl darstellt.

Die Synthese kann analog der Offenbarung von DE 10 2011 113 395 A1 aus Umsetzung von Isophoronnitril mit einem entsprechenden primären Amin und nachfolgende Hydrierung erfolgen.

Ganz besonders bevorzugt handelt es sich um methyliertes oder ethyliertes Isophorondiamin, d.h. um Verbindungen der Formel (I), in denen R = -CH₃ oder-C₂H₅ ist.

Wird das mindestens eine aminoalkylierte Isophorondiamin zusammen mit mindestens einer anderen aminogruppenhaltigen Verbindung eingesetzt, kann als letztere im Prinzip jede beliebige aminogruppenhaltige Verbindung eingesetzt werden. Bevorzugt werden primäre, sekundäre, tertiäre ggf. hydroxysubstituierte und ggf. aminoalkylierte Amine. Ganz besonders bevorzugte andere aminogruppenhaltige Verbindungen können ausgewählt werden aus der Gruppe bestehend aus Isophorondiamin, 4,4'-Diaminodicyclohexylmethan (PACM), aminoalkylierten 4,4'-Diaminodicyclohexylmethanen (aminoalkyliertem PACM), N,N-Dimethylcyclohexylamin, N-Methyldiethanolamin, Piperazin und 2-Aminoethanol.

Bevorzugt beträgt der Massenanteil an aminoalkyliertem Isophorondiamin, bezogen auf die Gesamtmasse an anwesenden aminogruppenhaltigen Verbindungen in dem Absorptionsmittel, 50 - 100 Gew.-%, weiter bevorzugt 70 - 100 Gew.-%, und noch weiter bevorzugt 90 - 100 Gew.-%, da so das Gas besonders gut absorbiert und bei besonders niedrigen Temperaturen wieder desorbiert werden kann. Wie bereits ausgeführt ist ganz besonders bevorzugt ein Verfahren, bei dem nur aminoalkyliertes Isophorondiamin eingesetzt wird. Dann beträgt entsprechend der Massenanteil an aminoalkyliertem Isophorondiamin, bezogen auf die Gesamtmasse an anwesenden aminogruppenhaltigen Verbindungen in dem Absorptionsmittel, 100 Gew.-%.

Prinzipiell kann in dem Absorptionsmittel ein Lösemittel vorliegen. Bevorzugt einsetzbare Lösemittel sind Wasser, organische Lösemittel mit einer bei 1,013 bar niedrigeren Siedetemperatur als Wasser (insbesondere entsprechende Alkohole und Ether). Ganz besonders bevorzugt wird ein Lösemittel ausgewählt aus der Gruppe bestehend aus Wasser, Methanol, Ethanol, n-Propanol, Isopropanol, Tetrahydrofuran, Diethylether, Diisopropylether, Methyl-t-butylether und Toluol eingesetzt.

Bevorzugt beträgt der Massenanteil an Lösemittel in dem Absorptionsmittel, bezogen auf die Masse der anderen anwesenden Komponenten, 0 - 50 Gew.-%, bevorzugt 0 - 30 Gew.-%, ganz besonders bevorzugt 0 - 10 Gew.-%.

Noch weiter bevorzugt wird das Verfahren jedoch lösemittelfrei geführt. Somit beträgt ganz besonders bevorzugt der Massenanteil an Lösemittel in dem Absorptionsmittel, bezogen auf die Masse der anderen anwesenden Komponenten, kein zugesetztes Lösemittel, d.h. 0 Gew.-%.

Überraschenderweise konnte festgestellt werden, dass die gebildeten Produkte aus aminoalkyliertem Isophorondiamin und zu entfernendem Gas, insbesondere die aus aminoalkyliertem Isophorondiamin und CO₂ gebildeten Carbamate, nicht nur aus den typischen Lösemitteln, sondern auch aus dem flüssig vorliegenden, als Lösemittel fungierendem aminoalkylierten Isophorondiamin ausfallen. Somit ermöglicht überraschenderweise die lösemittelfreie Verfahrensvariante die Führung des Verfahrens als besonders bevorzugtes zweistufiges Verfahren mit vermindertem Energieeinsatz, da das Lösemittel nicht aufwendig abgetrennt, aufgereinigt oder mit dem erhaltenen Produkt aufgeheizt werden muss. Weiterhin ist die Verwendung von Lösemitteln generell aufgrund der gewünschten Verminderung der VOC-Anteile nachteilig. Ein besonders bevorzugtes Verfahren ist somit ein Verfahren zur Entfernung mindestens eines Gases, bevorzugt von CO₂, aus einem Fluidstrom, bei dem ein Absorptionsmittel mit einem Fluidstrom in Kontakt gebracht wird, wobei
- das Absorptionsmittel mindestens eine aminogruppenhaltige Verbindung umfasst, die ein aminoalkyliertes Isophorondiamin ist, und
- das Absorptionsmittel lösemittelfrei ist, und
- das Absorptionsmittel mit dem Fluidstrom in Kontakt gebracht wird,
- das gebildete Produkt
   ∘ aus aminogruppenhaltiger Verbindung (insbesondere aus aminoalkyliertem Isophorondiamin) und
   ∘ zu entfernendem Gas (insbesondere CO₂),
   ∘ insbesondere das aus aminoalkyliertem Isophorondiamin und CO₂ gebildete Carbamat,
- aus dem Absorptionsmittel ausfällt
- und vom Absorptionsmittel abgetrennt und ggf. getrocknet wird und
- das abgetrennte und ggf. getrocknete Produkt so behandelt wird, dass das absorbierte Gas wieder freigesetzt wird.

Bevorzugt wird das Absorptionsmittel mit dem Fluidstrom dadurch in Kontakt gebracht, dass der Fluidstrom durch das Absorptionsmittel hindurchgeleitet wird. Zur besseren Verteilung kann der Fluidstrom durch einen Perkolator geleitet werden oder durch eine andere geeignete Maßnahme, die die Grenzfläche zwischen dem flüssigen Absorptionsmittel und dem Gas vergrößert. Weiter bevorzugt geschieht dies, indem das Absorptionsmittel in dem Fluidstrom versprüht wird.

Bevorzugte Reaktionszeiten liegen zwischen 5 Minuten und 48 h, bevorzugt 10 Minuten und 12 h. Bevorzugte Reaktionstemperaturen liegen zwischen Umgebungstemperatur (d.h. kein Erhitzen) und 80 °C. Bevorzugt liegen die Reaktionstemperaturen zwischen Raumtemperatur und 50 °C.

Das Ausfällen des Produktes aus aminoalkyliertem Isophorondiamin und zu entfernendem Gas kann dadurch unterstützt werden, dass Stoffe zugesetzt werden, die die Ausfällung fördern. Besonders geeignete, die Ausfällung fördernde Lösemittel können aus der Gruppe der Alkohole und der Ether ausgewählt werden.

Bevorzugt erfolgt die Abtrennung des gebildeten Produktes durch Filtration oder Zentrifugation.

Die Freisetzung des absorbierten Gases kann auf übliche dem Fachmann bekannte Arten und Weisen erfolgen. Das freigesetzte Gas kann entweder auf eine dem Fachmann bekannte Art und Weise gelagert oder direkt chemisch umgesetzt werden. Sofern bei der Freisetzung des Gases das Absorptionsmittel in identischer Form zurück erhalten wird, wird es bevorzugt dem erfindungsgemäßen Verfahren wieder zugeführt.

Insbesondere in dem Fall, dass das zu entfernende Gas CO₂ ist, kann die Freisetzung des CO₂ durch Erhitzen der gebildeten Carbamate erfolgen. Die dann ebenfalls freigesetzten eingangs eingesetzten aminogruppenhaltigen Verbindungen, insbesondere das zurück erhaltene aminoalkylierte Isophorondiamin, können wieder dem Absorptionsmittel für das Verfahren zugeführt werden. Prinzipiell kann für die Abspaltung des CO₂ ein basischer oder saurer Katalysator zugeführt werden. Bevorzugt wird das Verfahren jedoch ohne Katalysator durchgeführt. Weiterhin kann eine pH-Wert-Verschiebung mit Hilfe von elektrolytischen Methoden durchgeführt werden, um damit die Abspalttemperatur noch weiter abzusenken. Weiterhin kann es hilfreich sein, für die Abspaltung des CO₂ ein Inertgas, insbesondere Stickstoff, einzuleiten.

### Experimenteller Teil:

a) Vergleichsbeispiel:
   Luft wird 24 h Stunden durch Isophorondiamin durchgeblasen, bis sich Kristalle gebildet haben. Diese Kristalle bestehen laut NMR-Spektroskopie aus dem Carbamat aus IPD und CO₂. Die Kristalle sind an Luft stabil. Im DSC ist eine Zersetzung (CO₂-Abspaltung) bei 144-149 °C (848 J/g) zu erkennen. Erhitzt man diese Kristalle an der Luft (30 min, 150 °C) erhält man reines IPD zurück (NMR).
b) Vergleichsbeispiel:
   CO2 wird 24 h Stunden durch N-Methylcyclohexylamin durchgeblasen, bis sich Kristalle gebildet haben. Die entstehenden Kristalle sind nicht stabil und verflüssigen sich and der Luft zügig. Im DSC ist eine Zersetzung (CO₂-Abspaltung) bei 54-87°C °C (650 J/g) sowie bei 148-149 °C (220 J/g) zu erkennen. Der erste Peak erklärt die fehlende Stabilität bei Raumtemperatur, während der zweite eine erhöhte Energiezufuhr verglichen mit dem erfindungsgemäßen Beispiel c) dokumentiert.
c) Erfindungsgemäßes Beispiel:
   Luft wird 24 Stunden durch N-Methyl-IPD durchgeblasen, bis sich Kristalle gebildet haben. Diese Kristalle bestehen laut NMR-Spektroskopie aus dem Carbamat aus N-Methyl-IPD und CO₂. Die Kristalle sind an Luft stabil. Im DSC ist eine Zersetzung (CO₂-Abspaltung) bei 123-126 °C (742 J/g) zu erkennen. Erhitzt man diese Kristalle an der Luft (30 min, 130 °C) erhält man reines N-Methyl-IPD zurück (NMR).

## Patentansprüche

1. Verfahren zur Entfernung mindestens eines Gases aus einem Fluidstrom, bei dem ein Absorptionsmittel mit dem Fluidstrom in Kontakt gebracht wird,
**dadurch gekennzeichnet, dass**
das Absorptionsmittel mindestens eine aminogruppenhaltige Verbindung umfasst, die ein aminoalkyliertes Isophorondiamin ist.

2. Verfahren nach Anspruch 1,
**dadurch gekennzeichnet, dass**
der Fluidstrom ein Strom eines Fluids ausgewählt aus der Gruppe bestehend aus Erdgas, Synthesegas, Koksofengas, Spaltgas, Kohlevergasungsgas, Kreisgas, Deponiegas, Verbrennungsgas, Liquified Petroleum Gas und Liquid Natural Gas ist.

3. Verfahren nach Anspruch 1 oder 2,
**dadurch gekennzeichnet, dass**
das Gas ausgewählt ist aus CO₂, H₂S, COS, der Gruppe der gasförmigen Thiole, SOs, SO₂, CS₂ und HCN.

4. Verfahren nach einem der vorhergehenden Ansprüche,
**dadurch gekennzeichnet, dass**
das Absorptionsmittel eine aminogruppenhaltige Verbindung enthält.

5. Verfahren nach einem der Ansprüche 1 bis 3,
**dadurch gekennzeichnet, dass**
das Absorptionsmittel zwei aminogruppenhaltige Verbindungen enthält.

6. Verfahren nach einem der vorhergehenden Ansprüche,
**dadurch gekennzeichnet, dass**
das aminoalkylierte Isophorondiamin die Formel (I) 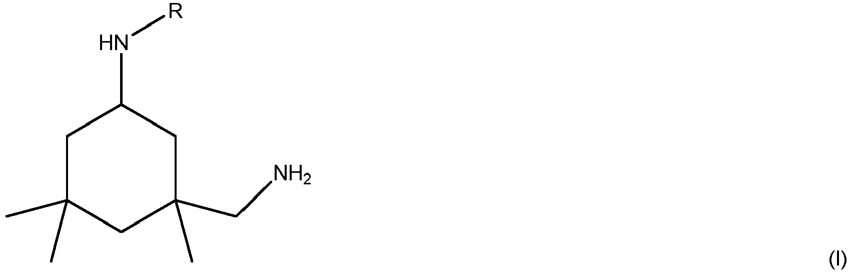
- mit R = -CnH2nR'
o mit n = 1-10 und
o R' = H, OH oder C₁-C₃-Alkyl
- oder R ein aromatischer Rest der Formel -C₆H₄R"
o mit R" = H, OH, oder C₁-C₃-Alkyl
ist.

7. Verfahren nach Anspruch 6,
**dadurch gekennzeichnet, dass**
R = -CH₃ oder -C₂H₅

8. Verfahren nach einem der vorhergehenden Ansprüche,
**dadurch gekennzeichnet, dass**
das mindestens eine aminoalkylierte Isophorondiamin zusammen mit mindestens einer anderen aminogruppenhaltigen Verbindung ausgewählt aus Isophorondiamin, 4,4'-Diaminodicyclohexylmethan (PACM), aminoalkylierten 4,4'-Diaminodicyclohexylmethanen (aminoalkyliertem PACM), N,N-Dimethylcyclohexylamin, N-Methyldiethanolamin, Piperazin und 2-Aminoethanol eingesetzt wird.

9. Verfahren nach einem der vorhergehenden Ansprüche,
**dadurch gekennzeichnet, dass**
der Massenanteil an aminoalkyliertem Isophorondiamin, bezogen auf die Gesamtmasse an anwesenden aminogruppenhaltigen Verbindungen in dem Absorptionsmittel, 50 - 100 Gew.-% beträgt.

10. Verfahren nach einem der vorhergehenden Ansprüche,
**dadurch gekennzeichnet, dass**
das Verfahren lösemittelfrei geführt wird.

11. Verfahren nach einem der vorhergehenden Ansprüche,
**dadurch gekennzeichnet, dass**
- das Absorptionsmittel lösemittelfrei ist, und
- das Absorptionsmittel mit dem Fluidstrom in Kontakt gebracht wird,
- das gebildete Produkt
∘ aus aminogruppenhaltiger Verbindung und
∘ zu entfernendem Gas,
- aus dem Absorptionsmittel ausfällt
- und vom Absorptionsmittel abgetrennt und ggf. getrocknet wird und
- das abgetrennte und ggf. getrocknete Produkt so behandelt wird, dass das absorbierte Gas wieder freigesetzt wird.
